Europäisches Patentamt

European Patent Office

Office européen des brevets

(11) Publication number: **0 016 348**
**B1**

(12) **EUROPEAN PATENT SPECIFICATION**

(45) Date of publication of patent specification: **29.08.84**

(21) Application number: **80100884.8**

(22) Date of filing: **22.02.80**

(51) Int. Cl.³: **C 08 J 9/04, C 08 L 23/06, B 29 D 27/00 // (C08J9/04, C08K5/02)**

(54) Method of making polyethylene blend foams having improved compressive strength and foams prepared by said method.

(30) Priority: **22.02.79 US 14184**

(43) Date of publication of application:
**01.10.80 Bulletin 80/20**

(45) Publication of the grant of the patent:
**29.08.84 Bulletin 84/35**

(84) Designated Contracting States:
**BE DE FR GB IT NL SE**

(56) References cited:
**AU-B- 469 838**
**GB-A-1 274 645**
**US-A-4 055 695**

**The file contains technical information submitted after the application was filed and not included in this specification**

(73) Proprietor: **THE DOW CHEMICAL COMPANY Dow Center 2030 Abbott Road Post Office Box 1967**
**Midland Michigan 48640 (US)**

(72) Inventor: **Park, Chung Poo**
**8762 Stoneridge Ct.**
**Pickerington Ohio (US)**
Inventor: **Bouton, Richard Arthur**
**6526 Galewood Ct.**
**St. Louis Missouri (US)**

(74) Representative: **Casalonga, Alain et al**
**BUREAU D.A. CASALONGA OFFICE JOSSE & PETIT Baaderstrasse 12-14**
**D-8000 München 5 (DE)**

Courier Press, Leamington Spa, England.

# 0 016 348

**Description**

The invention relates to polyethylene foams made from blends of low density polyethylene and intermediate density linear polyethylene. It particularly pertains to improvement in processes whereby are obtained foams having substantially closed-cell structure and improved compressive strength.

The term "compressive strength" as used herein means the property of foam articles as determined by the test procedure described in ASTM D—3575—77, expressed in pounds per square inch (psi).

Low density closed-cell ethylenic polymer resin foams can be made by extrusion foaming of a normally solid thermoplastic ethylenic polymer resin such as low density branched polyethylene. The resin is heat-plastified and mixed under pressure with a volatile material such as 1,2-dichlorotetrafluoroethane to form a flowable gel which is then passed through a shaping orifice or die opening into a zone of lower pressure. The volatile component vaporizes, forming a gas phase cellular structure in the gel which cools to a solid cellular foam resin. Desirably, the gas cells are substantially uniform in size and distribution in the foam body, and closed, i.e., separated from each other by membrane walls of resin. Although a number of general principles are understood, much extrusion foaming technology is empirical. Prior attempts to make low density foam products from intermediate or high density linear polyethylenes have met numerous difficulties.

Polymer foams from blends of polyethylenes are known. In U.S. Patent 3,496,124 foams having high impact resistance are prepared from blends of 65 to 80 parts by weight low density polyethylene having densities from about 0.89 to 0.93 g/cm³, with 35 to 20 parts by weight high density polyethylene having densities from about 0.94 to 0.97 g/cm³. Japanese Patent Application No. 47—56,497 filed June 8, 1972, discloses a polyethylene foam prepared from a blend of polyethylenes of two different densities. More specifically, polyethylene resins of density <0.93 and density >0.94 are melt blended, pulverized, immersed in liquid blowing agents, and foamed at a temperature <20° higher than the arithmetical mean of the m.p. of the two polyethylenes. U.S. Patent 3,793,239 discloses extrusion foaming of polymer blends of a crystalline polyolefin and 1 to 15 weight percent of a thermoplastic polymer using a two-component blowing agent. Blends of high density polyethylene and polypropylene are preferred.

U.S. Patent 3,351,569 teaches a method for making fine-celled polyolefin foam from crystalline polymers of ethylene or propylene using a liquid blowing agent and at least 10 percent by weight of a finely divided solid inorganic nucleating agent. Mixtures of two or more of crystalline polymers of ethylene or propylene can be used.

Summary of the Invention

Foam resin products having improved compressive strength at a given foam density, and a substantially closed-cell structure are obtained by extrusion foaming of a polyethylene blend comprising from 35 to 60 weight percent of low density branched polyethylene having a density of 0.910 to 0.930 g/cm³ in admixture with from 40 to 65 weight percent of intermediate density linear polyethylene having a density of 0.931 to 0.940 g/cm³. The resulting polyethylene blend foams have densities from 3.0 to 15.0 pounds per cubic foot (pcf) (0.048—0.240 g/cm³) and preferably 3.0 to 7.0 pcf (0.048—0.112 g/cm³). These foams have a substantially closed-cell structure and average compressive strength at 10 percent deformation of 7 to 170 psi (0.48 to 11.7 bars), preferably 7 to 60 psi (0.48 to 4.1 bars).

The term "average compressive strength" as used herein means an average of compressive strength values, expressed in psi or bars, in extrusion, vertical and transverse directions.

A particular benefit of this invention is the production of a low density foam from intermediate density linear polyethylene resin by blending therewith low density branched polyethylene.

The low density branched polyethylene may have a density from 0.910 to 0.930 g/cm³ and a melt index from 0.5 to 50 dg/min and can be produced by the known high pressure polymerization processes.

The intermediate density linear polyethylene may have a density from 0.931 to 0.940 g/cm³ and a melt index from 0.5 to 50 dg/min. Intermediate density linear polyethylene having these properties can be produced by Ziegler-type low pressure polymerization processes.

The starting polyethylene blend can also contain small portions of high density linear polyethylenes having a density greater than 0.940 g/cm³ provided that the resulting blend is extrudable.

The polyethylene blends of the present invention can be prepared by admixing from 35 to 60 weight percent, preferably from 40 to 55 percent by weight, most preferably about 50 percent by weight, of a low density branched polyethylene and from 40 to 65 percent by weight, preferably from 45 to 60 percent by weight, most preferably about 50 percent by weight, of an intermediate density linear polyethylene. These polyethylenes can be blended together in a variety of different ways readily known in the art, and the manner of blending is not critical as long as the two polyethylenes are thoroughly mixed together.

Particularly useful blends of polyethylenes have a difference in melt index value of less than 3.0 between the polyethylenes.

2

Blowing agents useful for making the polyethylene blend foams are well known: solids which decompose into gaseous products at the extrusion temperature and volatile liquids may be employed. Particularly preferred are halogenated hydrocarbon compounds having from 1 to 4 carbon atoms. Examples of such blowing agents are dichlorodifluoromethane, trichlorofluoromethane, chlorodifluoromethane, 1,2-dichlorotetrafluoroethane, 1-chloro-1,1-difluoroethane, 1,1-dichlorotrifluoroethane, 1,1-difluoroethane, 1-chloro-1,2,2,2-tetrafluoroethane, 1-chloro-1,1,2,2-tetrafluoroethane, 2,2-difluoropropane and 1,1,1-trifluoropropane. 1,2-dichlorotetrafluoroethane is most preferred. Although use of a single blowing agent is preferred, mixtures of two or more of such blowing agents may also be used.

The blowing agent is compounded into the starting polyethylene blend in proportions to give the desired degree of expansion in the resulting foamed cellular product, usually up to about 20 volume expansion to make products having foamed densities down to about 0.048 g/cm³ (about 3.0 pcf). Depending on the starting proportion of blowing agent, the resulting foamed products have densities from 3.0 to 15.0 pcf (0.048 to 0.240 g/cm³), preferably from 3.0 to 7.0 pcf (0.048 to 0.112 g/cm³).

The blowing agent is compounded into the polyethylene blend in conventional fashion to make a flowable gel, preferably in a mixing extruder using heat to plastify the resin blends, pressure to maintain the blowing agent in non-gaseous state, and mechanical working to obtain thorough mixing. The resulting gel is cooled, if necessary, and passed through a suitable die orifice into a zone of lower pressure, e.g., normal ambient air atmosphere, where it expands to a low density, cellular mass. As the foamed extrusion forms, it is withdrawn from the extruder, cooled and transferred for further processing, storage or use.

The resulting polyethylene blend foam is comprised of substantially closed-cell structure and is flexible to bending and shaping. It has improved compressive strength measured at 10 percent deformation as compared to foam articles having equivalent foam density but made from low density polyethylene alone.

The gas space in the cells of the polyethylene blend foam initially is filled with the volatile blowing agent(s) used to make the foam. As time passes, the blowing agent diffuses out of the foam and is gradually replaced by air diffusing into the foam cells. Ultimately, the foam gas space is essentially completely filled with air.

Finely divided solid materials such as calcium silicate, zinc stearate, magnesium silicate and the like can advantageously be incorporated with the polymer blend or gel prior to expansion to aid in controlling the size of the cells. They are usually employed in amounts up to one (1) percent by weight of the polymer.

Numerous fillers, pigments, lubricants, antioxidants and other known additives can also be incorporated into the polyethylene blend and resulting foam.

The following specific working examples illustrate the invention. All parts and percentages are by weight unless otherwise specified.

Example 1

Polyethylene blend foams are made by continuous extrusion from a conventional screw-type extruder with sequential zones usually designated feed zone, compression and melt zone, metering zone, and mixing zone. The extruder barrel is provided with conventional electric heaters for zoned temperature control and the usual instrumentation. An inlet opening for fluid blowing agent under pressure and feed rate control is provided in the extruder barrel between the metering zone and the mixing zone. The discharge end of the mixing zone of the extruder is connected through a cooler to a die orifice having generally rectangular configuration.

In practice, polyethylene resin granules are fed through the feed hopper to the extruder. The temperature in the metering zone is maintained in the range 180° ± 20°C. Blowing agent is pumped into the inlet between the metering and mixing zones at a predetermined rate under pressure to maintain liquid phase. The mixed mass of molten polyethylene blend and blowing agent from the mixing zone is cooled in the temperature control zone to a substantially uniform temperature which is just above the temperature at which solid polymer would crystallize out of the gel. For the polyethylene blends used in this example this is about 115°C to 119°C. Then it passes through the die orifice. The mass emerging from the die orifice to atmospheric pressure exands and forms a cellular foam which is continuously withdrawn from the die as the foam forms. It cools and hardens to a strip of cellular, flexible, solid polyethylene blend foam.

In the tests described below the polyethylenes listed in Table I are used. Specific types and ratios of blends of these polyethylenes are listed in Table II. These blends are mixed in the feed hopper of the extruder with magnesium silicate and calcium stearate as foam nucleation and cell size control agents at a substantially constant rate as shown in Table II. The blowing agent, dichlorodifluoromethane (FC—12) or 1,2-dichlorotetrafluoroethane (FC—114), is also fed to the extruder at a substantially constant rate.

Various physical properties of the resulting extruded foam products are measured and recorded in Table II.

TABLE I

| Polymer Designation | Polymer Composition | Density (gcm³) | Melt Index (dg/min) | Melting Point (°C) |
|---|---|---|---|---|
| I | Low density Polyethylene | .916 | 5.0 | 110 |
| II | Low density Polyethylene | .920 | 2.1 | 110 |
| III | Low density Polyethylene | .925 | 4.0 | 110 |
| IV | Linear Polyethylene | .935 | 5.0 | 124 |

TABLE II

| Test No. | Type (1) | Poly-ethylene Ratio (2) | Type | BA Rate (3) | Rate (4) | Foam Density pcf (g/cm³) (5) | Percent Open Cell (6) | Skin Quality | Average Compressive Strength psi bars (7) |
|---|---|---|---|---|---|---|---|---|---|
| 1.9 | I* | 100 | FC—114 | 7.5 | 0.30/0.10 | 5.9 (0.094) | 2.0 | Excellent | 18.7 (1.29) |
| 1.1 | I* | 100 | FC—114 | 11.5 | 0.30/0.10 | 3.9 (0.062) | 11.0 | Excellent | 9.7 (0.67) |
| 1.2 | I* | 100 | FC—12 | 10.0 | 0.30/0.10 | 4.0 (0.064) | 19.5 | Good | 8.7 (0.60) |
| 1.3 | I* | 100 | FC—12 | 12.4 | 0.30/0.10 | 3.3 (0.053) | 28.0 | Poor | ND |
| 1.4 | I/IV | 50/50 | FC—114 | 8.2 | 0.14/0.05 | 5.2 (0.083) | 1.0 | Excellent | 24.5 (1.69) |
| 1.5 | I/IV | 50/50 | FC—114 | 10.7 | 0.05/0.02 | 4.0 (0.064) | 5.0 | Excellent | 15.3 (1.05) |
| 1.6 | I/IV | 50/50 | FC—114 | 15.3 | 0.05/0.02 | 3.0 (0.048) | 27.0 | Good | 9.6 (0.66) |
| 1.7* | I/IV | 50/50 | FC—114 | 17.5 | 0.05/0.02 | ——————— Foam Collapsed ——————— | | | |
| 1.8 | I/IV | 50/50 | FC—114 | 10.0 | 0.05/0.02 | 3.0 (0.048) | 15.6 | Fair | 7.1 (0.49) |

Notes: (1) See Table I
(2) Weight percent of each polyethylene in the blend
(3) Rate of feed of blowing agent in parts per hundred parts of polymer blend
(4) Rate of feed of magnesium silicate and calcium stearate in parts per hundred parts of polymer blend
(5) Density of foam body measured within about 5 minutes after extrusion
(6) Amount of open cell in foam structure measure per ASTM D—2856—A
(7) Average compressive strength at 10% deformation measured per ASTM D—3575—77
ND = Not determined
* = Not an example of this invention.

From the data in Table II, it will be seen that polyethylene blend foams made in accordance with this invention have substantially improved compressive strength at 10 percent deformation as compared to the polyethylene foams of equivalent foam density made from low density polyethylene alone.

Measurement of percent open cell and a subjective evaluation of skin quality provide a good indication of the processibility of a polyethylene blend formulation. A low percentage of open cells is desir-

4

# 0 016 348

able as well as a smooth, uniform skin on the foam. Open cell concentrations of 15 to 30 percent indicate potential processability problems and concentrations greater than 30 percent are unacceptable. Given this criteria, Test No. 1.6 indicates that border line, yet still acceptable processability is realized when the foam density is as low as 0.048 $g/cm^3$. Attempts to lower the foam density below 0.048 $g/cm^3$ by using more blowing agent, as shown in Test No. 1.7, resulted in total collapse of the foam at the die. Test No. 1.8 indicates that FC—12 may be substituted for FC—114 as the blowing agent.

## Example 2

Foams were produced from blends of various low density and linear polyethylenes listed in Table I by continuous extrusion process of Example 1. Processability characteristics of the foams listed in this Example are shown in Table III.

TABLE III

| Test No. | Type (1) | Poly-ethylene Ratio (2) | Type | BA Rate (3) | Rate (4) | Foam Density pcf ($g/cm^3$) (5) | Percent Open Cell (6) | Skin Quality |
|---|---|---|---|---|---|---|---|---|
| 2.0* | II/IV | 85/15 | FC—114 | 12.7 | 0.55/0.40 | 3.6 (0.058) | 71 | Poor |
| 2.1* | II/IV | 70/30 | FC—114 | 12.9 | 0.55/0.40 | 3.6 (0.058) | 62 | Poor |
| 2.2 | II/IV | 55/45 | FC—114 | 12.4 | 0.55/0.40 | 3.7 (0.059) | 26 | Fair |
| 2.3 | II/IV | 40/60 | FC—114 | 12.4 | 0.55/0.40 | 3.7 (0.059) | 24 | Fair |
| 2.4* | II/IV | 25/75 | FC—114 | 12.0 | 0.55/0.40 | ——— Foam Collapsed ——— | | |
| 2.5 | I/IV | 40/60 | FC—114 | 12.7 | 0.55/0.40 | 3.7 (0.059) | 11 | Good |
| 2.6 | III/IV | 40/60 | FC—114 | 12.8 | 0.55/0.40 | 3.7 (0.059) | 17 | Good |
| 2.7* | I | 100 | FC—114 | 13.5 | 0.55/0.40 | 3.7 (0.059) | 9 | Good |
| 2.8* | IV | 100 | FC—114 | 8.8 | 0.55/0.40 | ——— Foam Collapsed ——— | | |

Notes: Same as Table II, except
(4) Rate of feed of magnesium silicate and zinc stearate in part per hundred parts of polymer blend.

From the results shown in Table IV, it will be seen, from Test Nos. 2.0 through 2.4, that the optimum polyethylene blends from the processability standpoint comprises from 40 to 55 weight percent of low density polyethylene in admixture with from 45 to 60 weight percent of intermediate density linear polyethylene. As shown in Test Nos. 2.3, 2.5, and 2.6 the best processability is obtained by blending the linear polyethylene with a low density polyethylene of equivalent melt index, i.e., 5.0; the worst processability is obtained from the blend of polyethylenes with the largest difference in melt indexes.

## Claims

1. A method of making polymer resin foams by extrusion foaming wherein a normally solid polyethylene blend is heat-plastified, mixed with a blowing agent to form a flowable gel and then passed through a die opening into a zone of lower pressure to form a cellular resinous body, characterized in that polyethylene blend comprises (1) 35 to 60 weight percent of low density branched polyethylene having a density from 0.910 to 0.930 $g/cm^3$ admixture with (2) 40 to 65 weight percent of intermediate density linear polyethylene having a density from 0.931 to 0.940 $g/cm^3$ thereby producing

5

polyethylene blend foams having density of 3.0 to 15.0 pcf (0.048 to 0.240 g/cm³), substantially closed-cell structure and compressive strength at 10 percent deformation of 7 to 170 psi (0.48—11.7 bars).

2. The method of Claim 1 wherein the blend foams have density of 3.0 to 7.0 pcf (0.048 to 0.112 a/cm³).

3. The method of Claim 2 wherein the blend foams have compressive strength at 10 percent deformation of 7 to 60 psi (0.48—4.1 bars).

4. The method of Claim 1 wherein the polyethylenes in the blend have a difference in melt index values of less than 3.0.

5. A method of Claim 1 wherein the blowing agent is a $C_{1-4}$ fluorocarbon.

6. A method according to Claim 1 wherein the blowing agent is 1,2-dichlorotetrafluoroethane or 1,1-dichloro-1,1-difluoromethane.

7. A polyethylene blend foam having substantially closed-cell structure, improved dimensional stability, and a compressive strength at 10 percent deformation of 7 to 170 psi (0.48 to 11.7 bars), wherein the blend comprises (1) 35 to 60 weight percent of low density branched polyethylene having a density from 0.910 to 0.930 g/cm³ admixture with (2) 40 to 65 weight percent of intermediate density linear polyethylene, having a density from 0.931 to 0.940 g/cm³ and the foam has a density of 3.0 to 15.0 pounds per cubic foot (0.048 to 0.240 g/cm³).

8. The foam of Claim 7 wherein the polyethylenes in the blend have a difference in melt index values of less than 3.0.

9. The foam of Claim 7 when prepared by the process of Claims 1—6.

**Revendications**

1. Méthode de fabrication de mousses de résines polymères par moussage par extrusion dans laquelle un mélange de polyéthylenes normalement solide est plastifié à chaud mélangé à un agent gonflant pour former un gel coulable puis passé à travers une ouverture de filière dans une zone de pression plus basse pour former un corps résineux cellulaire, caractérisée en ce que le mélange de polyéthylènes comprend (1) 35 à 60 pour cent en poids de polyéthylène ramifié basse densité ayant une densité de 0,910 à 0,930 g/cm³ mélangé (2) 40 à 65 pour cent en poids de polyéthylène linéaire de densité intermédiaire ayant une densité de 0,931 à 0,940 g/cm³, produisant ainsi des mousses de mélanges de polyéthylènes ayant des densités de 3,0 à 15,0 pcf (0,048 à 0,240 g/cm³), de structure cellulaire sensiblement fermée et ayant une résistance à la compression à 10 pour cent de déformation de 7 à 170 psi (0,48—11,7 bars).

2. Méthode selon la revendication 1, caractérisée en ce que les mousses de mélange ont une densité de 3,0 à 7,0 pcf (0,048 à 0,112 g/cm³).

3. Méthode selon la revendication 2, caractérisée en ce que les mousses de mélange ont une résistance à la compression à 10 pour cent de déformation de 7 à 60 psi (0,48) à 4,1 bars).

4. Méthode selon la revendication 1, caractérisée en ce que les polyéthylènes du mélange présentent des différences de valeurs d'indice d'écoulement à l'état fondu inférieures à 3.0.

5. Méthode selon la revendication 1, caractérisée en ce que l'agent gonflant est un fluorocarbure en $C_{1-4}$.

6. Méthode selon la revendication 1, caractérisée en ce que l'agent gonflant est le dichloro-1,2 tétrafluoroéthane ou le dichloro-1,1 difluoro-1,1 méthane.

7. Mousse de mélange de polyéthylènes ayant une structure cellulaire sensiblement fermée, une stabilité dimensionnelle améliorée et une résistance à la compression à 10 pour cent de déformation de 7 à 170 psi (0,48 à 11,7 bars), caractérisée en ce que le mélange comprend (1) 35 à 60 pour cent en poids de polyéthylène ramifié basse densité ayant une densité de 0,910 à 0,930 g/cm³ mélangé à (2) 40 à 65 pour cent en poids de polyéthylène linéaire de densité intermédiaire ayant une densité de 0,931 à 0,940 g/cm³ et que la mousse a une densité de 3,0 à 15,0 livres par pied au cube (0,048 à 0,240 g/cm³).

8. Mousse selon la revendication 7, caractérisée en ce que les polyéthylènes du mélange présentent une différence de valeurs d'indice d'écoulement à l'état fondu inférieures à 3.0.

9. Mousse selon la revendication 7, caractérisée en ce qu'elle est préparée selon le procédé des revendications 1—6.

**Patentansprüche**

1. Verfahren zum Herstellen von Polymerharzschäum durch Extrusionsschäumen, in dem ein im Normalzustand festes Polyethylengemisch thermisch erweicht, mit einem Treibmittel zu einem fließfähigen Gel versetzt wird und dann durch eine Düsenöffnung in einen Bereich niedrigeren Drucks verbracht wird um einen zelligen Harzkörper zu bilden, dadurch gekennzeichnet, daß das Polyethylengemisch (1) 35 bis 60 Gewichtsprozent verzweigtes Polyethylen niedriger Dichte mit einer Dichte von 0,910 bis 0,930 g/cm³ als Beimischung zu (2) 40 bis 65 Gewichtsprozent lineares Polyethylen mittlerer Dichte mit einer Dichte von 0,931 bis 0,940 g/cm³ enthält und somit Polyethylengemischschäume mit einer Dichte von 3,0 bis 15,0 pcf (0,048 bis 0,240 g/cm³) einer im wesentlischen geschlossenzelligen Struktur und einer Druckfestigkeit von 7 bis 170 psi (0,48 bis 11,7 bar) bei 10% Verformung erzeugt werden.

2. Verfahren gemäß Anspruch 1, in dem die Gemischschäume eine Dichte von 3,0 bis 7,0 pcf (0,048 bis 0,112 g/cm$^3$) haben.

3. Verfahren gemäß Anspruch 2, in dem die Gemischschäume eine Druckfestigkeit von 7 bis 60 psi (0,48 bis 4,1 bar) bei 10% Verformung haben.

4. Verfahren gemäß Anspruch 1, in dem die Polyethylene im gemisch Schmelzindexwertunterschiede von weniger als 3,0 haben.

5. Verfahren gemäß Anspruch 1, in dem das Treibmittel ein $C_{1-4}$ Fluorkohlenstoff ist.

6. Verfahren gemäß Anspruch 1, in dem das Treibmittel 1,2-Dichlortetrafluorethan oder 1,1-Dichlor-1,1-difluormethan ist.

7. Polyethylengemischschaum mit einer im wesentlichen geschlossenzelligen Struktur, verbesserter Maßhaltigkeit une einer Druckfestigkeit von 7 bis 170 psi (0,48 bis 11,7 bar) bei 10% Verformung, in dem das Gemisch (1) 35 bis 60 Gewichtsprozent eines verzweigten Polyethylens niedriger Dichte mit einer Dichte von 0,910 bis 0,930 g/cm$^3$ also Beimischung zu (2) 40 bis 65 Gewichtsprozent eines linearen Polyethylens mittlerer Dichte mit einer Dichte von 0,931 bis 0,940 g/cm$^3$ enthält und der Schaum eine Dichte von 3,0 bis 15,0 lb/cu.ft (0,048 bis 0,240 g/cm$^3$) hat.

8. Schaum gemäß Anspruch 7, in dem die Polyethylene im Gemisch Schmelzindexwertunterschiede von weniger als 3,0 haben.

9. Schaum gemäß Anspruch 7, der nach dem Verfahren gemäß den Ansprüchen 1—6 hergestellt wurde.